# EUROPEAN PATENT SPECIFICATION

(11) **EP 1 107 620 B1**
(45) Date of publication and mention of the grant of the patent: **14.04.2004**
(21) Application number: 00307839.1
(22) Date of filing: 11.09.2000
(51) Int. Cl.: H04Q 7/38, H04L 12/56

(54) **Multi-polling system for GPRS**
Mehrfach-Abfragesystem für GPRS
Système d'interrogations multiples pour GPRS

(30) Priority: 10.12.1999 EP 99309982
(43) Date of publication of application: 13.06.2001
(73) Proprietor: LUCENT TECHNOLOGIES INC., Murray Hill, New Jersey 07974-0636 (US)
(72) Inventor: Demetrescu, Christian, Twickenham, Middlesex TW2 5LY (GB); Ilas, Constantin, Swindon, Wiltshire SN5 7BB (GB); Samaras, Kostas, Swindon, Wiltshire SN2 2HL (GB); Samuel, Louis Gwyn, Swindon, Wiltshire SN2 3YG (GB); Somerville, Fiona Clare, Millbrook Place, Bath BA2 4JY (GB); Wu, Jian Jun, Reading, Berkshire (GB); Yan, Ran-Hong, Faringdon, Oxfordshire SN7 7SS (GB)
(74) Representative: Buckley, Christopher Simon Thirsk

(56) References cited:
- EP-A- 0 921 662
- WO-A-98/44639

## Description

### Field of the Invention

The present invention relates to data transmission systems, and in particular to mobile telephone networks employing such systems, and to base stations and satellite stations for use in such systems.

### Background of the Invention

In a mobile telephone network, there are a plurality of base stations serving different areas. Each base station is arranged to communicate with a plurality of mobile telephones in an associated area.

The base station communicates with the mobile telephones using a discrete number of channel frequencies. The mobile telephones are typically arranged in groups with the base station sending signals to all the members of the group along a common downlink channel having one unique frequency allocated to that group. The base station receives signals from each of the mobile telephones in the group along an uplink channel having a different unique frequency allocated to that group.

In operation, the base station sends data to all the mobile telephones of each group in a succession of data packets along the common downlink channel. Each packet of data consists of two parts. A first part called a header which contains a code ID identifying a selected mobile of the group and an uplink state flag (USF) for that mobile to trigger that mobile to return a packet of data to the base station and a second part containing a payload of data that the mobile telephone will download and use as required. The header is "transparent", that is it can be read by all the telephones in the group. The payload is cyphered and can only be read and downloaded by the telephone whose ID is contained in the header. The packets are typically of 20ms in duration and, when a particular telephone downloads a packet containing its uplink state flag, that telephone will reply very shortly after receiving the packet by sending a packet of data back to the base station along the common uplink channel. Such a system is known from EP 0 921 662.

If each mobile telephone only receives one uplink state flag (ie is polled) during each cycle of successive packets of data transmitted by the base station. it can only send data to the base station during one 20ms period in every cycle.

It is an object of the invention to provide an improved polling efficiency.

### Summary of the Invention

According to one aspect of this invention there is provided a data transmission system as defined by claim 1.

According to another aspect of this invention there is provided a base station as defined by claim 5.

According to a further aspect of this invention there is provided a mobile telephone as defined by claim 8.

### Brief Description of the Drawings

A mobile telephone network embodying the present invention, will now be described, by way of example, with reference to the accompanying drawings, in which:
Figure 1 is a block diagram of a base station communicating with a plurality of mobile telephones:
Figure 2 is a diagram illustrating the composition of the header of a data packet;
Figure 3 is a polling table illustrating the order of polling where there are three mobiles in each group; and
Figure 4 is a polling table illustrating the order of polling where there are four mobiles in each group.

### Description of the Preferred Embodiment

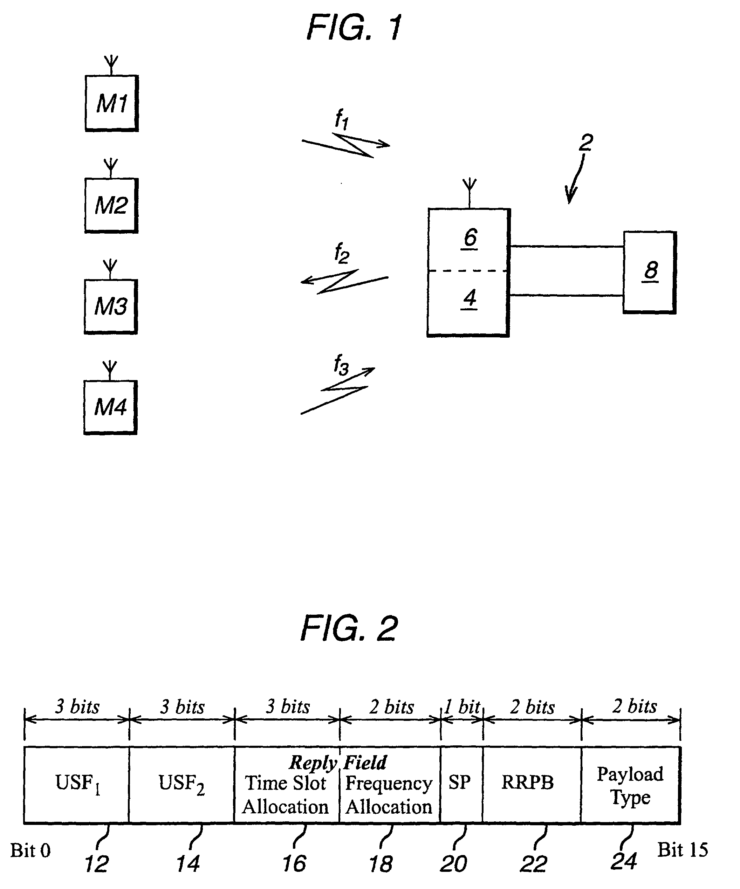

As shown in Figure 1, a base station 2 includes a radio transmitter 4 and receiver 6 for transmitting data simultaneously to a group of four satellites or mobile telephones M1 to M4 along a downlink channel of frequency f₂ and for receiving data principally along an uplink channel of frequency f₁.

The signals generated by a control unit 8 and transmitted by the base station 2 consist of a series of packets of a data each of 20ms duration.

As shown in Figure 2, each data packet includes a fixed length header H. The header includes a primary uplink state flag slot 12 containing, for example, the uplink state flag USF₁ for mobile M1 and a secondary uplink state flag slot 14 containing, for example, the uplink state flag USF₂ for the mobile M2. The secondary uplink state flag slot is followed by a time slot 16 and a frequency slot 18 defining, for example, a time slot T3 in an auxiliary uplink channel of frequency f₃. The payload P then follows. Then in order to permit compatability with current GPRS MAC (General Packet Radio Service Medium Access Control) standards, three additional slots, 20, 22, 24, respectively for Supplementary Polling (SP) data, Relative Reserve Block Period (RRBP) data and payload data are provided. All this data is associated with the mobile identified by USF₁, slot 2.

In operation, when the mobile telephone M1 receives the packet, it responds to the uplink state flag USF₁ to transmit a packet of data along the default uplink channel of frequency f₁. When the mobile telephone M2 receives the same packet of data, it responds to the uplink state flag USF₂ to transmit a packet of data in a specific time slot TS₃ along the auxiliary uplink channel of frequency f₃.

In this way, the base station can receive two data packets from two mobile telephones in response to the same packet of data sent along the downlink channel.

While the auxiliary uplink channel has been defined as having a frequency of f₃, it will be appreciated, that the base station may have a number of other channels of different frequency available for use as an auxiliary uplink channel. The base station may therefore select different auxiliary uplink channels on different occasions according to availability.

The modified MAC header shown in Figure 2 is two bytes in length ie 8 bits longer than the standard MAC header. Of these 8 bits, three are taken up by USF₂, the uplink state flag of the speculatively polled mobile M2 and five are taken up by the reply field consisting of time slot allocated subfield 16 three bits in length and a frequency allocation subfield 18 two bits in length.

The impact of the additional length in the header can be absorbed by removing more of the redundancies from the Vo GPRS (Voice GPRS) coder. An alternative would be to adopt a different lower bit rate voice coder.

In order to achieve efficient polling, it is important to create the correct polling pattern. Since the mobile polled in slot 12 always has a dedicated uplink (UL) reply channel, it is important that all the mobiles in any group are polled having their uplink state flag opening in slot 12 of a header once in every polling cycle. Also during each polling cycle, the uplink state flag of each mobile should appear in the slot 14 of a header.

Thus, with a group of three mobiles, the control unit 8 will generate three packets for each cycle. The slot 12 of the header in the first packet and the slot 14 in the header of the third packet will contain the USF₁ for mobile M1. The slot 14 of the header in the first packet of the slot 12 of the header in the second packet will contain the USF₂ for mobile M2. The slot 14 of the header in the second packet and the slot 12 of the header in the third packet will contain the USF₃ for the mobile M3. The cycle is then repeated ad infinitum.

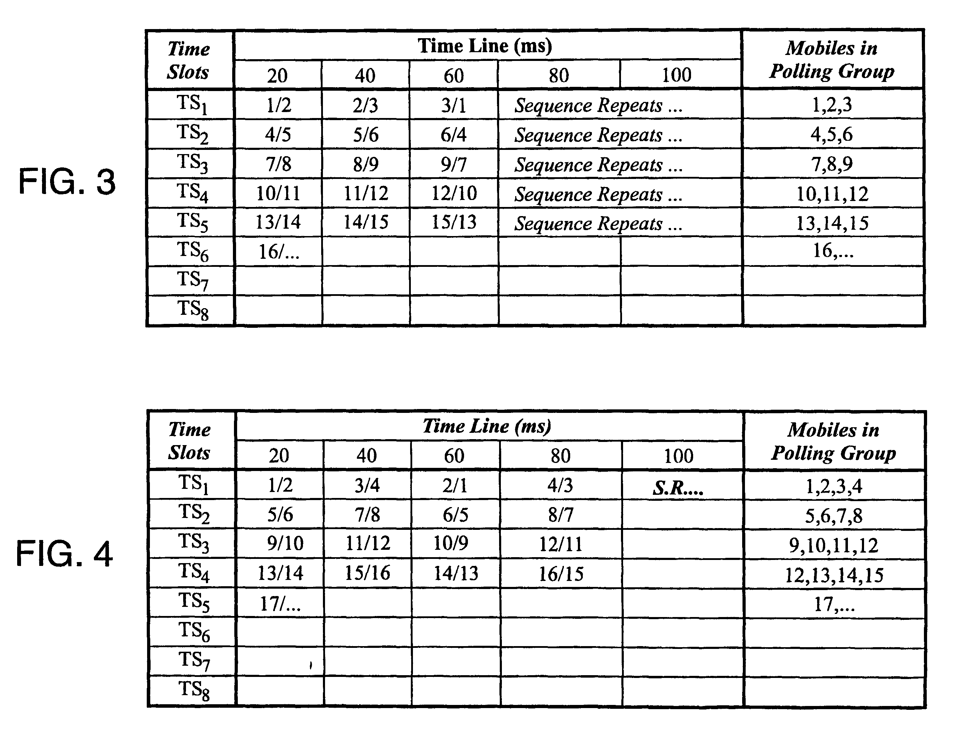

The polling pattern as illustrated in Figure 3 shows a plurality of groups of three mobiles 1-3, 4-6, 7-9, 10-12 and 13 to 15. Each group has a different uplink channel and Time Slot (TS) for the auxiliary channel. Each packet is 20ms long with each cycle being repeated once every 60ms. From Figure 3, it will be seen that the notation 1/2 in the 20ms column represents the USF of mobile M1 in the slot 12 and the USF of the mobile M2 in the slot 14 of the header of the first packet.

Using the polling pattern of Figure 3 has the advantage that if the "speculatively" polled mobile fails the first time around it will be captured the second time around inside the normal polling period. This is especially important for real time traffic since access delays have to be minimised. Using this scheme we can poll three mobiles twice in each 60ms. Therefore. the Polling Group contains three mobiles. The other advantage that this polling scheme has is that it allows the system to send RR (Radio Resource) messaging to the first named and speculatively polled mobiles and indicate the validity of the expected reply (Packet Control Acknowledgement) since the order of the USF within the MAC header is rotated.

If the pattern in Figure 3 is adopted then the subsequent behaviour is as follows. When the mobiles are polled and the polling is successful, ie both mobiles have something to transmit, then the default channel (USF₁'s paired UL timeslot) and reply channel becomes occupied. If the poll of USF₁ fails then it will be polled again during polling period (40ms-80ms later, depending on the system). If the poll of USF₂ fails then it will be polled again in the following timeslot. The behaviour described in Figure 3 enables an early capture of the USF₂ mobile having data to transmit.

When four mobiles are included in each group, the polling cycle is increased to 80ms. The polling takes place speculatively so that each mobile has an USF appearing at least once in a header slot 12, once every cycle of four packets and a USF appearing at least once in header slot 14, once during the same cycle of packets. Figure 4 shows a table of polling neither of which can be used for different groups of four mobiles.

If the pattern in Figure 4 is adopted then there is no early capturing of data to transmit from the speculatively polled mobile. However, an additional mobile can be added to the Polling Group and the reversal of the ordering of the USFs with the MAC header allows for the scheduling and reply to RR messaging within the MAC header.

## Claims

1. A data transmission system comprising a base station (2) having a radio transmitter (4) and a receiver (6) and a plurality of mobile stations (M1..M4) each having a radio transmitter and a receiver, the transmitter (4) of the base station (2) and the receivers of the mobile stations (M1..M4) all being tuned to the same downlink channel (f₂), and the transmitters of the mobile stations (M1..M4) and the receiver (6) of the base station (2) all being tuned to a common uplink channel (f₁), the base station (2) including control means (8) for cyclically generating a succession of data packets and transmitting them to the mobile stations (M1..M4), each data packet comprising a header section having a first section (12), containing a first uplink state flag (USF₁) identifying with a first selected mobile station (M1) which when received by the first selected mobile station (M1) polls that mobile station (M1) alone to cause it to send a data packet back to the base station (2) along the uplink channel (f₁), **characterised in that**
the transmitters of the mobile stations (M1..M4) and the receiver of the base station (2) are also tuned to at least one auxiliary uplink channel (f₃), and that the header section of a data packet has a second section (14,16,18) containing second uplink state flag (USF₂) identifying a second selected mobile station (M2) coupled with the identity (18) of and time slot (16) for, a said auxiliary uplink channel (f₃) which when received by the second selected mobile station (M2) polls that mobile station (M2) alone to cause the said second selected mobile station (M2) to send a data packet back to the base station (2) along said auxiliary uplink channel (f₃) in said time slot, the number of packets in each cycle corresponding to the number of said plurality of mobile stations (M1..M4), an uplink state flag for each mobile station (M1..M4) appearing once in a said first section (12) of a said header during each cycle and appearing once in a said second section (14,16,18) of a different header during the same cycle whereby each mobile station (M1..M4) is polled twice during each cycle, once in response to an uplink state flag in a first section (12) of a header and once in response to an uplink state flag in a second section (14,16,18) of a different header.

2. A system according to Claim 1, wherein said plurality of mobile stations comprise three in number and are polled twice during each cycle of three packets.

3. A system according to Claim 2, wherein for any two successive packets of data the contents of the second section (14,16,18) of the header of the first occurring packet contains the same uplink state flag identity as the first section (12) of the header of the immediately following packet.

4. A system according to Claim 1, wherein said plurality of mobile stations comprise four in number and wherein for any two successive packets of data, the four sections of the two headers are occupied by respective ones of the four uplink state flags associated with the four mobile stations.

5. A base station (2) having a radio transmitter (4) and a receiver (6) for communication with a plurality of mobile stations (M1..M4), the transmitter (4) of the base station (2) being tuned to a predetermined downlink channel (f₂), and the receiver (6) of the base station (2) being tuned to a predetermined uplink channel (f₁), the base station (2) including control means (8) for cyclically generating a succession of data packets for transmission to the mobile stations (M1..M4), each data packet comprising a header section having a first section (12), containing a first uplink state flag (USF₁) identifying with a first selected mobile station (M1),
**characterized in that**
the receiver (6) of the base station (2) is also tuned to at least one auxiliary uplink channel (f₃), and that the header section of a data packet has a second section (14,16,18) containing second uplink state flag (USF₂) identifying a second selected mobile station (M2) coupled with the identity (18) of and time slot (16) for said auxiliary uplink channel (f₃), the number of packets in each cycle corresponding to the number of said plurality of mobile stations (M1..M4), an uplink state flag for each mobile station (M1..M4) appearing once in a said first section (12) of a said header during each cycle and appearing once in a said second section (14,16,18) of a different header during the same cycle whereby the base station (2) polls each mobile station (M1..M4) twice during each cycle, once in response to an uplink state flag in a first section (12) of a header and once in response to an uplink state flag in a second section (14,16,18) of a different header.

6. A base station according to Claim 5, wherein the control means (8) is programmed to poll three mobile stations twice during each cycle of three packets, wherein for any two successive packets of data the contents of the second section (14,16,18) of the header of the first-occurring packet contains the same uplink state flag identity as the first section (12) of the header of the immediately following packet.

7. A base station according to Claim 1, wherein the control means (8) is programmed to poll four mobile stations and wherein for any two successive packets of data, the four sections of the two headers are occupied by respective ones of the four uplink state flags associated with the four mobile stations.

8. A mobile station (M1..M4) with a unique identity having control means and a radio transmitter and a receiver for communicating with a base station (2), the receiver of the mobile station being tuned to a predetermined downlink channel (f₂), and the transmitter of the mobile station being tuned to a predetermined uplink channel (f₁), the mobile station being arranged to receive from said base station (2) a succession of data packets, each data packet comprising a header section having a first section (12), containing a first uplink state flag (USF₁) carrying the identity of a first selected mobile station which if that identity corresponds with the said unique identity causes the control means to send via the transmitter a data packet via the transmitter back to the base station (2) along said uplink channel (f₁), **characterised in that**
the transmitter of the mobile station is also tuned to at least one auxiliary uplink channel (f₃), and that the header section has a second section (14,16,18) containing second uplink state flag (USF₂) carrying the identity of a second selected mobile station coupled with the identity (18) of and time slot (16) for a said auxiliary uplink channel (f₃), which if that identity corresponds to said unique identity causes the control means to send a data packet back to the base station (2) along said auxiliary uplink channel (f₃) in said time slot, an uplink state flag carrying said unique identity appearing once in a said first section (12) of a said header during each cycle and appearing once in a said second section (14,16,18) of a different header during the same cycle whereby said mobile station transmits data back to the base station (2) twice during each cycle.

## Patentansprüche

1. Datenübertragungssystem mit einer Basisstation (2) mit einem Funksender (4) und einem Empfänger (6) und einer Mehrzahl von Mobilstationen (M1, M4) jeweils mit einem Funksender und einem Empfänger, wobei der Sender (4) der Basisstation (2) die Empfänger der Mobilstationen (M1...M4) alle auf denselben Abwärtskanal (f₂) abgestimmt sind und die Sender der Mobilstationen (M1...M4) und der Empfänger (6) der Basisstation (2) alle auf einen gemeinsamen Aufwärtskanal (f₁) abgestimmt sind, wobei die Basisstation (2) Steuermittel (8) zum zyklischen Erzeugen einer Folge von Datenpaketen und ihrer Übertragung zu den Mobilstationen (M1...M4) enthält, wobei jedes Datenpaket einen Kopfteil mit einem ersten Abschnitt (12) umfaßt, der eine erste Aufwärtszustandsmarkierung (USF₁) enthält, die eine erste ausgewählte Mobilstation (M1) **kennzeichnet,** die bei ihrem Empfang durch die erste ausgewählte Mobilstation (M1) diese Mobilstation (M1) allein abfragt, um sie dazu zu veranlassen, ein Datenpaket zurück zur Basisstation (2) entlang dem Aufwärtskanal (f₁) zu senden, **dadurch gekennzeichnet, daß** die Sender der Mobilstationen (M1...M4) und der Empfänger der Basisstation (2) ebenfalls auf mindestens einen Aufwärts-Hilfskanal (f₃) abgestimmt sind und daß der Kopfteil eines Datenpakets einen zweiten Abschnitt (14, 16, 18) mit einer zweiten Aufwärtszustandsmarkierung (USF₂) aufweist, die eine zweite ausgewählte Mobilstation (M2) **kennzeichnet**, die an die Identität (18) von und den Zeitschlitz (16) für einen Aufwärts-Hilfskanal (f₃) angekoppelt ist, der bei Empfang durch die zweite ausgewählte Mobilstation (M2) diese Mobilstation (M2) allein abfragt, um zu veranlassen, daß die zweite ausgewählte Mobilstation (M2) ein Datenpaket zurück zur Basisstation (2) entlang dem Aufwärts-Hilfskanal (f₃) in diesem Zeitschlitz sendet, wobei die Anzahl von Paketen in jedem Zyklus der Anzahl der besagten Mehrzahl von Mobilstationen (M1...M4) entspricht, wobei eine Aufwärtszustandsmarkierung für jede Mobilstation (M1...M4) einmal in einem ersten Abschnitt (12) eines Kopfteils während jedem Zyklus erscheint und einmal in einem zweiten Abschnitt (14, 16, 18) eines anderen Kopfteils während desselben Zyklus erscheint, wodurch jede Mobilstation (M1...M4) zweimal während jedem Zyklus abgefragt wird, einmal als Reaktion auf eine Aufwärtszustandsmarkierung in einem ersten Abschnitt (12) eines Kopfteils und einmal als Reaktion auf eine Aufwärtszustandsmarkierung in einem zweiten Abschnitt (14, 16, 18) eines anderen Kopfteils.

2. System nach Anspruch 1, wobei die Mehrzahl von Mobilstationen an der Zahl drei umfassen und zweimal während jedem Zyklus von drei Paketen abgefragt werden.

3. System nach Anspruch 2, wobei für beliebige zwei aufeinanderfolgende Datenpakete der Inhalt des zweiten Abschnitts (14, 16, 18) des Kopfteils des ersten auftretenden Pakets die gleiche Aufwärtszustandsmarkierungsidentität wie der erste Abschnitt (12) des Kopfteils des unmittelbar nachfolgenden Pakets enthält.

4. System nach Anspruch 1, wobei die Mehrzahl von Mobilstationen an der Zahl vier umfaßt und wobei für beliebige zwei aufeinanderfolgende Datenpakete die vier Abschnitte der zwei Kopfteile durch jeweilige der vier Aufwärtszustandsmarkierungen belegt sind, die den vier Mobilstationen zugeordnet sind.

5. Basisstation (2) mit einem Funksender (4) und einem Empfänger (6) zur Kommunikation mit einer Mehrzahl von Mobilstationen (M1..M4), wobei der Sender (4) der Basisstation (2) auf einen vorbestimmten Abwärtskanal (f₂) abgestimmt ist und der Empfänger (6) der Basisstation (2) auf einen vorbestimmten Aufwärtskanal (f₁) abgestimmt ist, wobei die Basisstation (2) Steuermittel (8) zum zyklischen Erzeugen einer Folge von Datenpaketen zur Übertragung an die Mobilstationen (M1...M4) enthält, wobei jedes Datenpaket einen Kopfteil mit einem ersten Abschnitt (12) umfaßt, der eine erste Aufwärtszustandsmarkierung (USF₁) enthält, die eine erste ausgewählte Mobilstation (M1) **kennzeichnet, dadurch gekennzeichnet,** daß der Empfänger (6) der Basisstation (2) auch auf mindestens einen Aufwärts-Hilfskanal (f₃) abgestimmt ist und daß der Kopfteil eines Datenpakets einen zweiten Abschnitt (14, 16, 18) mit einer zweiten Aufwärtszustandsmarkierung (USF₂) aufweist, die eine zweite ausgewählte Mobilstation (M2) **kennzeichnet,** die an die Identität (18) von und den Zeitschlitz (16) für den Aufwärts-Hilfskanal (f₃) angekoppelt ist, wobei die Anzahl von Paketen in jedem Zyklus der Anzahl der Mehrzahl von Mobilstationen (M1...M4) entspricht, wobei eine Aufwärtszustandsmarkierung für jede Mobilstation (M1...M4) einmal in einem ersten Abschnitt (12) eines Kopfteils während jedem Zyklus erscheint und einmal in einem zweiten Abschnitt (14, 16, 18) eines anderen Kopfteils während desselben Zyklus erscheint, wodurch die Basisstation (2) jede Mobilstation (M1...M4) zweimal während jedem Zyklus abfragt, einmal als Reaktion auf eine Aufwärtszustandsmarkierung in einem ersten Abschnitt (12) eines Kopfteils und einmal als Reaktion auf eine Aufwärtszustandsmarkierung in einem zweiten Abschnitt (14, 16, 18) eines anderen Kopfteils.

6. Basisstation nach Anspruch 5, wobei das Steuermittel (8) dazu programmiert ist, drei Mobilstationen zweimal während jedem Zyklus von drei Paketen abzufragen, wobei für jede zwei aufeinanderfolgenden Datenpakete der Inhalt des zweiten Abschnitts (14, 16, 18) des Kopfteils des zuerst auftretenden Pakets dieselbe Aufwärtszustandsmarkierungsidentität wie der erste Abschnitt (12) des Kopfteils des unmittelbar folgenden Pakets enthält.

7. Basisstation nach Anspruch 1, wobei das Steuermittel (8) dazu programmiert ist, vier Mobilstationen abzufragen, und wobei für jede zwei aufeinanderfolgende Datenpakete die vier Abschnitte der zwei Kopfteile durch jeweilige der vier Aufwärtszustandsmarkierungen belegt sind, die den vier Mobilstationen zugeordnet sind.

8. Mobilstation (M1...M4) mit einer einmaligen Identität mit Steuermitteln und einem Funksender und einem Empfänger zum Kommunizieren mit einer Basisstation (2), wobei der Empfänger der Mobilstation auf einen vorbestimmten Abwärtskanal (f₂) abgestimmt ist und der Sender der Mobilstation auf einen vorbestimmten Aufwärtskanal (f₁) abgestimmt ist, wobei die Mobilstation so angeordnet ist, daß sie von der Basisstation (2) eine Folge von Datenpaketen empfängt, wobei jedes Datenpaket einen Kopfteil mit einem ersten Abschnitt (12) umfaßt, der eine erste Aufwärtszustandsmarkierung (USF₁) enthält, die die Identität einer ersten ausgewählten Mobilstation führt, die, wenn diese Identität der einmaligen Identität entspricht, das Steuermittel veranlaßt, ein Datenpaket über den Sender zurück zur Basisstation (2) entlang dem Aufwärtskanal (f₁) zu senden, **dadurch gekennzeichnet, daß** der Sender der Mobilstation ebenfalls auf mindestens einen Aufwärts-Hilfskanal (f₃) abgestimmt ist und daß der Kopfteil einen zweiten Abschnitt (14, 16, 18) mit einer zweiten Aufwärtszustandsmarkierung (USF₂) aufweist, die die Identität einer zweiten ausgewählten Mobilstation führt, die an die Identität (18) von und den Zeitschlitz (16) für einen Aufwärts-Hilfskanal (f₃) angekoppelt ist, der, wenn diese Identität der einmaligen Identität entspricht, das Steuermittel veranlaßt, ein Datenpaket zurück zur Basisstation (2) entlang dem Aufwärts-Hilfskanal (f₃) in dem Zeitschlitz zu senden, wobei eine die einmalige Identität führende Aufwärtszustandsmarkierung einmal in einem ersten Abschnitt (12) eines Kopfteils während jedem Zyklus erscheint und einmal in einem zweiten Abschnitt (14, 16, 18) eines anderen Kopfteils während desselben Zyklus erscheint, wodurch die Mobilstation zweimal während jedem Zyklus Daten zurück zur Basisstation (2) überträgt.

## Revendications

1. Système de transmission de données comprenant une station de base (2) possédant un émetteur radio (4) et un récepteur (6) et une pluralité de stations mobiles (M1..M4) possédant chacune un émetteur radio et un récepteur, l'émetteur (4) de la station de base (2) et les récepteurs des stations mobiles (M1..M4) étant tous accordés sur le même canal de liaison descendante (f₂), et les émetteurs des stations mobiles (M1..M4) et le récepteur (6) de la station de base (2) étant tous accordés sur un canal de liaison ascendante commun (f₁), la station de base (2) comportant un moyen de commande (8) pour générer cycliquement une succession de paquets de données et les transmettre aux stations mobiles (M1..M4), chaque paquet de données comprenant une section d'en-tête comportant une première section (12), contenant un premier drapeau d'état de liaison ascendante (USF₁) identifiant une première station mobile sélectionnée (M1), qui, une fois reçu par la première station mobile sélectionnée (M1), interroge ladite station mobile (M1) seule pour l'amener à renvoyer un paquet de données à la station de base (2) le long du canal de liaison ascendante (f₁), **caractérisé en ce que**
les émetteurs des stations mobiles (M1..M4) et le récepteur de la station de base (2) sont également accordés sur au moins un canal auxiliaire de liaison ascendante (f₃) et la section d'en-tête d'un paquet de données comporte une deuxième section (14, 16, 18) contenant un deuxième drapeau d'état de liaison ascendante (USF₂) identifiant une deuxième station mobile sélectionnée (M2), couplé à l'identité (18) et au créneau temporel (16) d'un dit canal auxiliaire de liaison ascendante (f₃), qui, une fois reçu par la deuxième station mobile sélectionnée (M2), interroge ladite station mobile (M2) seule pour amener ladite deuxième station mobile sélectionnée (M2) à renvoyer un paquet de données à la station de base (2) le long dudit canal auxiliaire de liaison ascendante (f₃) dans ledit créneau temporel, le nombre de paquets dans chaque cycle correspondant au nombre de ladite pluralité de stations mobiles (M1..M4), un drapeau d'état de liaison ascendante pour chaque station mobile (M1..M4) apparaissant une fois dans une dite première section (12) d'un dit en-tête durant chaque cycle et apparaissant une fois dans une dite deuxième section' (14, 16, 18) d'un en-tête différent durant le même cycle, en vertu de quoi chaque station mobile (M1..M4) est interrogée à deux reprises durant chaque cycle, une fois en réponse à un drapeau d'état de liaison ascendante dans une première section (12) d'un en-tête et une fois en réponse à un drapeau d'état de liaison ascendante dans une deuxième section (14, 16, 18) d'un en-tête différent.

2. Système selon la revendication 1, dans lequel ladite pluralité de stations mobiles sont au nombre de trois et sont interrogées à deux reprises durant chaque cycle de trois paquets.

3. Système selon la revendication 2, dans lequel, pour deux paquets successifs quelconques de données, le contenu de la deuxième section (14, 16, 18) de l'en-tête du paquet apparaissant en premier contient la même identité de drapeau d'état de liaison ascendante que la première section (12) de l'en-tête du paquet immédiatement suivant.

4. Système selon la revendication 1, dans lequel ladite pluralité de stations mobiles sont au nombre de quatre, et dans lequel, pour deux paquets successifs quelconques de données, les quatre sections des deux en-têtes sont occupées par des drapeaux respectifs parmi les quatre drapeaux d'état de liaison ascendante associés aux quatre stations mobiles.

5. Station de base (2) possédant un émetteur radio (4) et un récepteur (6) en vue de communiquer avec une pluralité de stations mobiles (M1..M4), l'émetteur (4) de la station de base (2) étant accordé sur un canal de liaison descendante prédéterminé (f₂), et le récepteur (6) de la station de base (2) étant accordé sur un canal de liaison ascendante prédéterminé (f₁), la station de base (2) comportant un moyen de commande (8) pour générer cycliquement une succession de paquets de données et les transmettre aux stations mobiles (M1..M4), chaque paquet de données comprenant une section d'en-tête comportant une première section (12), contenant un premier drapeau d'état de liaison ascendante (USF₁) identifiant une première station mobile sélectionnée (M1), **caractérisée en ce que**
le récepteur (6) de la station de base (2) est également accordé sur au moins un canal auxiliaire de liaison ascendante (f₃) et la section d'en-tête d'un paquet de données comporte une deuxième section (14, 16, 18) contenant un deuxième drapeau de liaison ascendante (USF₂) identifiant une deuxième station mobile sélectionnée (M2), couplé à l'identité (18) et au créneau temporel (16) dudit canal auxiliaire de liaison ascendante (f₃), le nombre de paquets dans chaque cycle correspondant au nombre de ladite pluralité de stations mobiles (M1..M4), un drapeau d'état de liaison ascendante pour chaque station mobile (M1..M4) apparaissant une fois dans une dite première section (12) d'un dit en-tête durant chaque cycle et apparaissant une fois dans une dite deuxième section (14, 16, 18) d'un en-tête différent durant le même cycle, en vertu de quoi chaque station mobile (M1..M4) est interrogée à deux reprises durant chaque cycle par la station de base (2), une fois en réponse à un drapeau d'état de liaison ascendante dans une première section (12) d'un en-tête et une fois en réponse à un drapeau d'état de liaison ascendante dans une deuxième section (14, 16, 18) d'un en-tête différent.

6. Station de base selon la revendication 5, dans laquelle le moyen de commande (8) est programmé pour interroger trois stations mobiles à deux reprises durant chaque cycle de trois paquets, dans laquelle, pour deux paquets successifs quelconques de données, le contenu de la deuxième section (14, 16, 18) de l'en-tête du paquet apparaissant en premier contient la même identité de drapeau d'état de liaison ascendante que la première section (12) de l'en-tête du paquet immédiatement suivant.

7. Station de base selon la revendication 1, dans laquelle le moyen de commande (8) est programmé pour interroger quatre stations mobiles, et dans laquelle, pour deux paquets successifs quelconques de données, les quatre sections des deux en-têtes sont occupées par des drapeaux respectifs parmi les quatre drapeaux d'état de liaison ascendante associés aux quatre stations mobiles.

8. Station mobile (M1..M4) à identité unique possédant un moyen de commande et un émetteur radio et un récepteur pour communiquer avec une station de base (2), le récepteur de la station mobile étant accordé sur un canal de liaison descendante prédéterminé (f₂), et l'émetteur de la station mobile étant accordé sur un canal de liaison ascendante prédéterminé (f₁), la station mobile étant conçue pour recevoir de ladite station de base (2) une succession de paquets de données, chaque paquet de données comprenant une section d'en-tête comportant une première section (12), contenant un premier drapeau d'état de liaison ascendante (USF₁) transportant l'identité d'une première station mobile sélectionnée, qui, si cette identité correspond à ladite identité unique, amène le moyen de commande à renvoyer, via l'émetteur, un paquet de données à la station de base (2) le long dudit canal de liaison ascendante (f₁), **caractérisée en ce que**
l'émetteur de la station mobile est également accordé sur au moins un canal auxiliaire de liaison ascendante (f₃) et la section d'en-tête comporte une deuxième section (14, 16, 18) contenant un deuxième drapeau d'état de liaison ascendante (USF₂) transportant l'identité d'une deuxième station mobile sélectionnée, couplé à l'identité (18) et au créneau temporel (16) d'un dit canal auxiliaire de liaison ascendante (f₃), qui, si cette identité correspond à ladite identité unique, amène le moyen de commande à renvoyer un paquet de données à la station de base (2) le long dudit canal auxiliaire de liaison ascendante (f₃) dans ledit créneau temporel, un drapeau d'état de liaison ascendante transportant ladite identité unique apparaissant une fois dans une dite première section (12) d'un dit en-tête durant chaque cycle et apparaissant une fois dans une dite deuxième section (14, 16, 18) d'un en-tête différent durant le même cycle, en vertu de quoi ladite station mobile retransmet des données à la station de base (2) à deux reprises durant chaque cycle.
